# EUROPEAN PATENT APPLICATION

(11) **EP 4 131 465 A1**
(43) Date of publication of application: **08.02.2023**
(21) Application number: 21780813.8
(22) Date of filing: 25.03.2021
(51) Int. Cl.: H01M 4/13, H01M 4/133, H01M 4/134, H01M 4/36, H01M 4/62, H01M 10/052, H01M 10/0567

(54) **NONAQUEOUS ELECTROLYTE SECONDARY BATTERY**

(30) Priority: 31.03.2020 JP 2020064284
(71) Applicant: Panasonic Intellectual Property Management Co., Ltd., Osaka-shi, Osaka 540-6207 (JP)
(72) Inventor: ISHIGURO Tasuku, Chuo-ku, Osaka-shi, Osaka 540-6207 (JP); NISHITANI Satoshi, Chuo-ku, Osaka-shi, Osaka 540-6207 (JP); ZHONG Yuanlong, Chuo-ku, Osaka-shi, Osaka 540-6207 (JP); FUJITOMO Chisaki, Chuo-ku, Osaka-shi, Osaka 540-6207 (JP)
(74) Representative: Novagraaf International SA
(86) International application number: PCT/JP2021/012470
(87) International publication number: WO 2021/200528

(57) **Abstract**

A non-aqueous electrolyte secondary battery includes a positive electrode, a negative electrode, and a non-aqueous electrolyte. The negative electrode includes a negative electrode material mixture containing a negative electrode active material capable of electrochemically absorbing and releasing lithium ions, and carbon nanotubes. The negative electrode active material includes a silicon-containing material and a carbonaceous material. The non-aqueous electrolyte includes at least one cyclic ester selected from the group consisting of a cyclic sulfate ester, a cyclic sulfite ester, and a sultone. A content of the carbon nanotubes in the negative electrode material mixture is 0.005 mass% or more and 0.05 mass% or less.

## Description

### [Technical Field]

The present disclosure relates to a non-aqueous electrolyte secondary battery.

### [Background Art]

A non-aqueous electrolyte secondary battery represented by a lithium ion secondary battery includes a positive electrode, a negative electrode, and a non-aqueous electrolyte. As the non-aqueous electrolyte, a liquid non-aqueous electrolyte is mainly used. The negative electrode includes a negative electrode material mixture containing a negative electrode active material capable of electrochemically absorbing and releasing lithium ions. For the negative electrode active material, a material capable of electrochemically absorbing and releasing lithium ions is used. Examples of such a material include a carbonaceous material and a silicon-containing material. To the negative electrode material mixture, a carbonaceous material that does not absorb or release lithium ions, such as carbon fibers and carbon nanotubes, is added in some cases.

Patent Literature 1 proposes using a composite electrode agent for a lithium ion secondary battery. The composite electrode agent includes particles containing an element capable of absorbing and releasing lithium ions, carbon particles capable of absorbing and releasing lithium ions, multi-walled carbon tubes, and carbon nanofibers.

Patent Literature 2 proposes using, for a lithium ion battery, an electrode produced by dry-mixing an active material, carbon fibers having a fiber diameter of 50 nm or more and 300 nm or less, carbon fibers having a fiber diameter of 5 nm or more and 400 nm or less, carbon black, and a binder, to obtain a mixture, and adding a liquid medium to the mixture and kneading, followed by forming the kneaded material into a sheet form.

### [Citation List]

### [Patent Literature]

[PTL 1] Japanese Laid-Open Patent Publication No. 2014-146519
[PTL 2] Japanese Laid-Open Patent Publication No. 2014-160590

### [Summary of Invention]

The silicon-containing material undergoes significant changes in volume in association with absorption and release of lithium ions. Therefore, when a silicon-containing material is used as the negative electrode active material, the conductive paths between the negative electrode active material particles is broken, and the negative electrode active material particles tend to be isolated, and as a result, the cycle characteristics tend to deteriorate. In the case of using a negative electrode active material containing a silicon-containing material, when combined with carbon nanotubes, the conductivity between the negative electrode active material particles tend to be easily secured. On the other hand, by using carbon nanotubes, the surface area of the negative electrode material mixture is increased, which increases side reactions, and the consumption of non-aqueous electrolyte becomes noticeable.

One aspect of the present disclosure relates to a non-aqueous electrolyte secondary battery, including:
a positive electrode, a negative electrode, and a non-aqueous electrolyte, wherein
the negative electrode includes a negative electrode material mixture containing a negative electrode active material capable of electrochemically absorbing and releasing lithium ions, and carbon nanotubes,
the negative electrode active material includes a silicon-containing material and a carbonaceous material,
the non-aqueous electrolyte includes at least one cyclic ester selected from the group consisting of a cyclic sulfate ester, a cyclic sulfite ester, and a sultone, and
a content of the carbon nanotubes in the negative electrode material mixture is 0.005 mass% or more and 0.05 mass% or less.

The reduction of non-aqueous electrolyte when the charge and discharge of the non-aqueous electrolyte secondary battery are repeated can be suppressed.

### [Brief Description of Drawing]

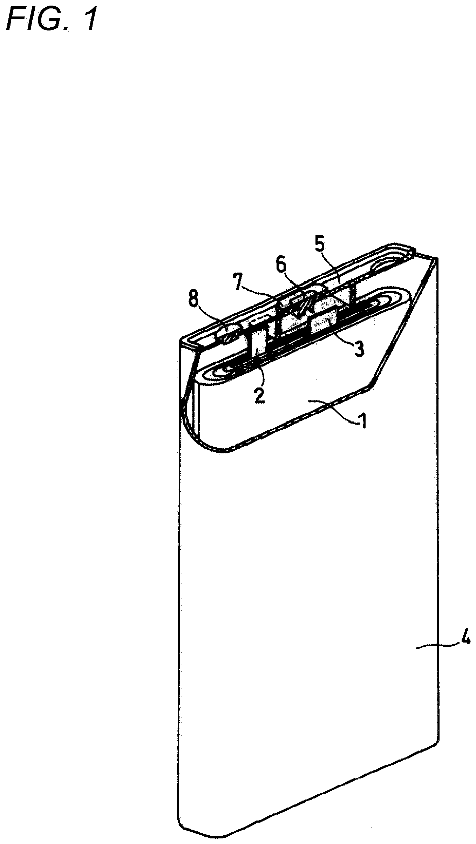

[FIG. 1] A partially cut-away schematic oblique view of a non-aqueous electrolyte secondary battery according to one embodiment of the present disclosure.

### [Description of Embodiments]

In a non-aqueous electrolyte secondary battery, a silicon-containing material used as the negative electrode active material has a high capacity, but undergoes significant changes in volume in association with absorption and release of lithium ions during charge and discharge. Therefore, in the negative electrode material mixture including a silicon-containing material, the conductive paths between the negative electrode active material particles is broken, and the negative electrode active material particles tend to be isolated. This, as a result, leads to deterioration in the cycle characteristics. When carbon nanotubes are further contained in such a negative electrode material mixture, due to the presence of the carbon nanotubes between the negative electrode active material particles, the breakage of conductive paths is suppressed, and relatively excellent cycle characteristics can be ensured. However, when the negative electrode material mixture contains carbon nanotubes, the surface area of the negative electrode material mixture increases, and side reactions increase, causing the non-aqueous electrolyte to be reduced noticeably after repeated charge and discharge.

With regard to a cyclic ester, such as ethylene sulfite and propane sultone, even when a non-aqueous electrolyte containing such a cyclic ester is combined with the negative electrode material mixture that does not contain carbon nanotubes, this makes almost no contribution in suppressing the reduction of non-aqueous electrolyte after repeated charge and discharge. It has been clarified, however, that when the non-aqueous electrolyte containing a cyclic ester as mentioned above is combined with the negative electrode material mixture containing a specific amount of carbon nanotubes, surprisingly, the reduction of non-aqueous electrolyte after repeated charge and discharge is suppressed.

In view of the above, a non-aqueous electrolyte secondary battery of the present disclosure includes a positive electrode, a negative electrode, and a non-aqueous electrolyte. The negative electrode includes a negative electrode material mixture including a negative electrode active material capable of electrochemically absorbing and releasing lithium ions, and carbon nanotubes. The negative electrode active material includes a silicon-containing material and a carbonaceous material. The non-aqueous electrolyte includes at least one cyclic ester selected from the group consisting of a cyclic sulfate ester, a cyclic sulfite ester, and a sultone. The content of the carbon nanotubes in the negative electrode material mixture is 0.005 mass% or more and 0.05 mass% or less. In the following, the silicon-containing material is sometimes referred to as a Si-containing material, and the carbon nanotubes are sometimes referred to as CNTs. Moreover, the aforementioned cyclic ester is sometimes simply referred to as a first component.

With such a configuration, in the non-aqueous electrolyte secondary battery of the present disclosure, despite the use of CNTs, the reduction of non-aqueous electrolyte after repeated charge and discharge can be suppressed as described above. Although the details are not yet clear, the reduction of non-aqueous electrolyte is considered to be suppressed for the following reason. With the negative electrode material mixture does not contain CNTs, the effect of suppressing the reduction of non-aqueous electrolyte cannot be observed even when the first component is used in the non-aqueous electrolyte. It can be inferred therefrom that the first component acts on the CNTs, to suppress the side reaction in which the CNTs are to be directly or indirectly involved. By using the first component, a non-aqueous electrolyte reduction suppression effect which is sufficient for compensating the reduction of non-aqueous electrolyte due to the use of CNTs can be obtained.

In the non-aqueous electrolyte secondary battery of the present disclosure, by using the first component, the side reaction at the negative electrode is suppressed, and electrons are preferentially consumed in the charge and discharge reactions. Therefore, the decrease in capacity in the early stage of charge and discharge can be suppressed. Furthermore, by containing CNTs in the negative electrode material mixture, the breakage of conductive paths in the negative electrode material mixture during repeated charge and discharge can be suppressed, even though a Si-containing material is used as the negative electrode active material. In addition, by the first component, the side reaction is suppressed even during repeated charge and discharge, the decrease in capacity after repeated charge and discharge can be suppressed. Therefore, excellent cycle characteristics can be ensured.

When the content of CNTs in the negative electrode material mixture is less than 0.005 mass%, despite using CNTs in the negative electrode material mixture, the reduction of non-aqueous electrolyte is unlikely to become apparent. Even though the negative electrode material mixture containing CNTs in such a content is combined with the non-aqueous electrolyte containing the first component, the non-aqueous electrolyte reduction suppression effect by the first component is hardly exhibited. On the other hand, even though the negative electrode material mixture in which the content of CNTs exceeds 0.05 mass% is combined with the non-aqueous electrolyte containing the first component, the non-aqueous electrolyte reduction suppression effect by the first component is small. When CNTs are used in the negative electrode material mixture in a conventional non-aqueous electrolyte secondary battery, the content of CNTs in the negative electrode material mixture is about 0.1 mass% to 9 mass% as disclosed in Patent Literatures 1 and 2. In such a conventional non-aqueous electrolyte secondary battery, even when the non-aqueous electrolyte containing the first component is used, the consumption of non-aqueous electrolyte due to the use of CNTs becomes noticeable, and the non-aqueous electrolyte reduction suppression effect by the first component is hardly obtained, or, if obtained, the effect is small.

The non-aqueous electrolyte secondary battery of the present disclosure will be specifically described below for each component element.

### (Negative electrode)

The negative electrode includes a negative electrode material mixture. The negative electrode may include a negative electrode material mixture and a negative electrode current collector holding the negative electrode material mixture. The negative electrode usually includes a negative electrode material mixture in a layer form (hereinafter, a negative electrode material mixture layer). The negative electrode material mixture contains a negative electrode active material and CNTs. The negative electrode material mixture may further contain at least one selected from the group consisting of a binder, a thickener, and a conductive agent other than CNTs.

### (Negative electrode active material)

As the negative electrode active material, a material capable of electrochemically absorbing and releasing lithium ions is used. The negative electrode active material includes a Si-containing material and a carbonaceous material. The degree of expansion and contraction during charge and discharge of the carbonaceous material is smaller than that of the Si-containing material. By using the Si-containing material and the carbonaceous material in combination, during repeated charge and discharge, the contacting condition between the negative electrode active material particles and between the negative electrode material mixture and the negative electrode current collector can be maintained more favorably. By combining the carbonaceous material with the Si-containing material, excellent cycle characteristics tend to be ensured, while a high capacity of the Si-containing material is ensured. The negative electrode active material may contain, if necessary, another negative electrode active material other than the Si-containing material and the carbonaceous material. Examples of the other negative electrode active material include at least one selected from the group consisting of Sn simple substance, a Sn alloy, and a Sn compound, such as a Sn oxide.

### (Si-containing material)

Examples of the Si-containing material include Si simple substance, a silicon alloy, a silicon compound (e.g., silicon oxide), and a composite material containing a lithium ion conductive phase (matrix) and silicon particles (fine Si phase) dispersed in the lithium ion conductive phase. The silicon oxide is exemplified by SiOₓ. Here, x satisfies, for example, 0.5 ≤ x < 2, and may satisfy 0.8 ≤ x ≤ 1.6.

In view of ensuring more excellent cycle characteristics, the Si-containing material preferably contains the aforementioned composite material. The lithium ion conductive phase preferably contains at least one selected from the group consisting of a SiO₂ phase and a silicate phase. The lithium ion conductive phase may further contain a carbon phase. The lithium ion conductive phase can form an amorphous phase. The Si-containing material may include a composite material containing a SiO₂ phase and silicon particles dispersed therein, a composite material containing a silicate phase and silicon particles dispersed therein, a composite material containing a carbon phase and silicon particles dispersed therein, and the like.

The SiO₂ phase is an amorphous phase containing 95 mass% or more of silicon dioxide. The composite material containing a SiO₂ phase and silicon particles dispersed therein is represented by SiOₓ, and x may be, for example, in the above range. The SiOₓ can be obtained, for example, by heat-treating silicon monoxide, to separate it into a SiO₂ phase and a fine Si phase through disproportionation reaction. By observing a particle cross section of the SiOₓ using a transmission electron microscope (TEM), the Si particles dispersed in the SiO₂ phase can be confirmed.

The silicate phase preferably contains at least one of an alkali metal element (a Group I element other than hydrogen of the long-periodic table) and a Group II element of the long-periodic table. The alkali metal element includes lithium (Li), potassium (K), sodium (Na), and the like. The Group II element includes magnesium (Mg), calcium (Ca), strontium (Sr), barium (Ba), and the like. The lithium silicate phase can have a composition represented by a formula: Li_{2y}SiO_{2+y} where 0 < y < 2. Here, y may be 1/2, and may be 1. The composite material containing a silicate phase and silicon particles dispersed therein can be obtained by, for example, pulverizing a mixture of silicate and a raw material silicon under stirring in a ball mill or the like, into fine particles, and then heat-treating the mixture in an inert atmosphere.

The content of the silicon particles dispersed in the silicate phase may be 30 mass% or more and 95 mass% less, and may be 35 mass% or more and 75 mass% or less, relative to the whole composite material.

The carbon phase includes, for example, formless carbon (amorphous carbon) having low crystallinity. The amorphous carbon may be, for example, graphitizable carbon (hard carbon) or non-graphitizable carbon (soft carbon). The composite material containing a carbon phase and silicon particles dispersed therein can be obtained by, for example, pulverizing a mixture of a carbon source and a raw material silicon under stirring in a ball mill or the like, into fine particles, and then heat-treating the mixture in an inert atmosphere. For the carbon source, for example, saccharides, such as carboxymethyl cellulose (CMC), a water-soluble resin, such as polyvinylpyrrolidone, and the like can be used.

The composition of the Si-containing material can be determined by, for example, obtaining a reflected electron image of a cross section of the negative electrode material mixture layer with a field emission scanning electron microscope (FE-SEM), to observe a particle of the Si-containing material, and performing an elemental analysis on the observed particle of the Si-containing material. For the elemental analysis, for example, electron probe microanalyzer (EPMA) can be used. The composition of the lithium ion conductive phase can also be determined by the aforementioned analysis.

The Si-containing material may be used singly, or in combination of two or more kinds.

The Si-containing material is, for example, a particulate material. The average particle diameter (D50) of the Si-containing material is, for example, 1 µm or more and 25 µm or less, preferably 4 µm or more and 15 µm or less. In the above range, favorable battery performance tends to be obtained.

In the present specification, the average diameter (D50) means a particle diameter (volume average particle diameter) at 50% cumulative volume in a particle size distribution measured by a laser diffraction scattering method. As the measurement instrument, for example, "LA-750" available from Horiba, Ltd. (HORIBA) can be used.

In view of improving the conductivity, at least part of the particle surface of the Si-containing material may be coated with a conductive layer. The conductive layer contains a conductive material, such as conductive carbon. The coating amount of the conductive layer is, for example, 1 part by mass or more and 10 parts by mass or less per 100 parts by mass of the total of the Si-containing material particles and the conductive layer. The Si-containing material particles having a conductive layer on its surface can be obtained by, for example, mixing coal pitch or the like with Si-containing material particles, followed by heat-treating in an inert atmosphere.

The changes in volume due to expansion and contraction of the Si-containing material during charge and discharge is significant. Therefore, when the proportion of the Si-containing material occupying the negative electrode active material increases, the cycle characteristics tend to deteriorate. According to the present disclosure, in which the negative electrode material mixture contains a specific amount of CNTs, even when the proportion of the Si-containing material occupying the negative electrode active material is relatively high, the breakage of conductive paths can be suppressed, and excellent cycle characteristics tend to be ensured. The proportion of the Si-containing material occupying the negative electrode active material is preferably 4 mass% or more, and may be 5 mass% or more. The proportion of the Si-containing material is preferably 15 mass% or less, and may be 10 mass% or less. These upper and lower limits can be combined in any combination.

### (Carbonaceous material)

Examples of the carbonaceous material include graphite, graphitized carbon (soft carbon), and graphitized carbon (hard carbon). The carbonaceous material may be used singly, or in combination of two or more kinds.

As the carbonaceous material, in particular, graphite is preferred in terms of its excellent stability during charge and discharge and its small irreversible capacity. Examples of the graphite include natural graphite, artificial graphite, and graphitized mesophase carbon particles. The graphite particles may partially contain amorphous carbon, graphitizable carbon, and/or non-graphitizable carbon.

Graphite is a carbonaceous material with a developed graphite-like crystal structure. The interplanar spacing d002 of the (002) plane of the graphite measured by the X-ray diffractometry may be, for example, 0.340 nm or less, and may be 0.3354 nm or more and 0.340 nm or less. The crystallite size Lc (002) of the graphite may be, for example, 5 nm or more, and may be 5 nm or more and 200 nm or less. The crystallite size Lc (002) is measured by, for example, the Scherrer method. When the interplanar spacing d002 of the (002) plane of the graphite and the crystallite size Lc (002) are within the above ranges, a high capacity is likely to be obtained.

The proportion of the carbonaceous material occupying the negative electrode active material is, for example, 97 mass% or less, may be 96 mass% or less, and may be 95 mass% or less. The proportion of the carbonaceous material occupying the negative electrode active material is, for example, 76 mass% or more, may be 80 mass% or more or 85 mass% or more, and may be 90 mass% or more. These upper and lower limits can be combined in any combination.

In the negative electrode active material, the proportion of the total amount of the Si-containing material and the carbonaceous material is preferably 90 mass% or more, and may be 95 mass% or more or 98 mass% or more. In the negative electrode active material, the proportion of the total amount of the Si-containing material and the carbonaceous material is 100 mass% or less. The negative electrode active material may be constituted only of the Si-containing material and the carbonaceous material.

### (CNTs)

CNTs are a carbonaceous material having a nano-sized diameter and having a structure in which a sheet of a six-membered ring network formed of carbon atoms (graphene) is wound in a tubular shape. CNTs have excellent conductivity. When the number of graphene layers constituting the tubular structure is one, the nanotubes are called single-walled CNTs (SWCNTs: single-walled carbon nanotubes). When the number of the above layers is more than one, the nanotubes are called multi-walled CNTs (MWCNT: multi-walled carbon nanotubes).

The CNTs preferably include SWCNTs. In this case, more excellent cycle characteristics tend to be ensured, and in addition, the non-aqueous electrolyte reduction suppression effect by the first component is more likely to be exhibited.

The ratio of the SWCNTs occupying the CNTs is, for example, 50% or more, may be 75% or more, and may be 90% or more. The ratio of the SWCNTs occupying the CNTs is 100% or less.

The ratio of the SWCNTs occupying the CNTs means a ratio of the number of SWCNTs to the whole CNTs.

The inclusion of the CNTs in the negative electrode material mixture can be confirmed, for example, from a scanning electron microscope (SEM) image of a cross section of the negative electrode material mixture layer.

The ratio of the SWCNTs occupying the CNTs contained in the negative electrode material mixture can be determined as follows.

An image of a cross section of the negative electrode material mixture layer or CNTs is obtained using a SEM. In the SEM image, a plurality of (e.g., 50 to 200) CNTs are randomly selected and observed, to determine the number of SWCNTs, and the ratio of the number of SWCNTs to the total number of the selected CNTs is calculated.

The content of the CNTs in the negative electrode material mixture is 0.005 mass% or more, may be 0.01 mass% or more, or 0.015 mass% or more, and may be 0.02 mass% or more. When the content of the CNTs is in such a range, more excellent cycle characteristics can be ensured, and the non-aqueous electrolyte reduction suppression effect obtained by using the non-aqueous electrolyte containing the first component becomes more likely to be apparent. The content of the CNTs is 0.05 mass% or less, and may be 0.03 mass% or less. When the content of the CNTs is in such a range, the reduction of non-aqueous electrolyte can be further suppressed by using the non-aqueous electrolyte containing the first component. These upper and lower limits can be combined in any combination.

The quantitative analysis of the CNTs is performed by, for example, using a Raman spectroscopy and a thermogravimetric analysis in combination.

In view of reducing the breakage of conductive paths during charge and discharge, the average diameter of the CNTs is, for example, 1 nm or more and 10 nm or less, and may be 1 nm or more and 5 nm or less.

In view of reducing the breakage of conductive paths during charge and discharge, the average length of CNTs is, for example, 1 µm or more and 100 µm or less, and may be 5 µm or more and 20 µm or less.

The average length and average diameter of the CNTs can be obtained from an image of a cross section of the negative electrode material mixture layer or CNTs using at least one of a SEM and a TEM. Specifically, on the photographed image, a plurality of (e.g., 50 to 200) CNTs are randomly selected, and the length and diameter thereof are measured and averaged respectively, to determine an average length and an average diameter. The length of the CNT means a length when the CNT is straightened.

### (Others)

As a binder, for example, a resin material is used. Examples of the binder include fluorocarbon resins (e.g., polytetrafluoroethylene, polyvinylidene fluoride), polyolefin resins (e.g., polyethylene, polypropylene), polyamide resins (e.g., aramid resin), polyimide resins (e.g., polyimide, polyamide imide), acrylic resins (e.g., polyacrylic acid, polymethacrylic acid, acrylic acid-methacrylic acid copolymer, ethylene-acrylic acid copolymer, or salts thereof), vinyl resins (e.g., polyvinyl acetate), and rubbery materials (e.g., styrene-butadiene copolymer rubber (SBR)). The binder may be used singly or in combination of two or more kinds.

As a thickener, for example, cellulose derivatives, such as cellulose ethers, are exemplified. Examples of the cellulose derivatives include CMC and modified products thereof, and methyl cellulose. The modified products of CMC also include salts of CMC. The salts include alkali metal salts (e.g., sodium salts), ammonium salts, and the like. The thickener may be used singly or in combination of two or more kinds.

As a conductive agent other than CNTs, for example, conductive fibers or particles other than CNTs are exemplified. Examples of the conductive fibers include carbon fibers and metal fibers. Examples of the conductive particles include conductive carbon (e.g., carbon black) and metal powder. The conductive agent may be used singly or in combination of two or more kinds.

The negative electrode current collector is selected according to the type of the non-aqueous electrolyte secondary battery. The negative electrode current collector is, for example, in the form of sheet. As the current collector, a metal foil and the like may be used. As the current collector, a porous current collector may be used. Examples of the porous current collector include a net, a punched metal, and an expanded metal.

As a material of the negative electrode current collector, stainless steel, nickel, a nickel alloy, copper, and a copper alloy are exemplified.

The thickness of the negative electrode current collector is not limited, but is, for example, 1 to 50 µm, and may be 5 to 30 µm.

The negative electrode can be formed by, for example, applying a negative electrode slurry prepared by dispersing constituent components of the negative electrode material mixture in a dispersion medium, onto a surface of the negative electrode current collector, followed by drying. The applied film after drying may be rolled, if necessary. The negative electrode material mixture layer may be formed on one surface or both surfaces of the sheet-form negative electrode current collector.

Examples of the dispersion medium include, but are not limited to, water, alcohols (e.g., ethanol), ethers (e.g., tetrahydrofuran), amides (e.g., dimethylformamide), N-methyl-2-pyrrolidone (NMP), and mixed solvents of these.

### (Positive electrode)

The positive electrode may include a positive electrode current collector, and a positive electrode material mixture layer supported on a surface of the positive electrode current collector. The positive electrode material mixture layer can be formed by applying a positive electrode slurry prepared by dispersing a positive electrode material mixture in a dispersion medium, onto a surface of the positive electrode current collector, followed by drying. The applied film after drying may be rolled, if necessary. The positive electrode material mixture layer may be formed on one surface or both surfaces of the positive electrode current collector. The positive electrode material mixture includes a positive electrode active, as an essential component, and can include a binder, a conductive agent, and the like as optional components. As the dispersion medium, for example, a dispersion medium selected from those exemplified for the negative electrode can be used.

The positive electrode active material may be, for example, a composite oxide containing lithium and a transition metal. Examples of the transition metal include Ni, Co, and Mn. Examples of the composite oxide containing lithium and a transition metal include LiₐCoO₂, LiₐNiO₂, LiₐMnO₂, LiₐCo_{b1}Ni_{1-b1}O₂, LiₐCo_{b1}M_{1-b1}O_{c1}, LiₐNi_{1-b1}M_{b1}O_{c1}, LiₐMn₂O₄, and LiₐMn_{2-b1}M_{b1}O₄. Here, a = 0 to 1.2, b1 = 0 to 0.9, and c1 = 2.0 to 2.3. M is at least one selected from the group consisting of Na, Mg, Sc, Y, Mn, Fe, Co, Ni, Cu, Zn, Al, Cr, Pb, Sb and B. The value "a" representing the molar ratio of lithium increases and decreases during charge and discharge.

In particular, preferred is a lithium-nickel composite oxide represented by LiₐNi_{b2}M_{1-b2}O₂ where 0 < a ≤ 1.2, 0.3 ≤ b2 ≤ 1, and M is at least one selected from the group consisting of Mn, Co and Al. In view of achieving a higher capacity, preferably, 0.85 ≤ b2 ≤ 1. In view of the stability of the crystal structure, more preferred is LiₐNi_{b2}Co_{c2}Al_{d}O₂ where 0 < a ≤ 1.2, 0.85 ≤ b2 < 1, 0 < c2 ≤ 0.15, 0 < d ≤ 0.1, andb2+c2+d = 1.

As the binder, a resin material as exemplified for the negative electrode and the like can be used. As the conductive agent, for example, a conductive agent selected from those exemplified for the negative electrode can be used. As the conductive agent, graphite may be used.

The form and the thickness of the positive electrode current collector may be respectively selected from the forms and the range corresponding to those of the negative electrode current collector. As a material of the positive electrode current collector, for example, stainless steel, aluminum, an aluminum alloy, and titanium are exemplified.

### (Non-aqueous electrolyte)

As the non-aqueous electrolyte, a liquid non-aqueous electrolyte is usually used. The non-aqueous electrolyte usually contains a non-aqueous solvent and a lithium salt dissolved in the non-aqueous solvent, and in addition, contains a first component.

### (First component)

As the first component, at least one selected from the group consisting of a cyclic sulfate ester, a cyclic sulfite ester, and a sultone is used. The first component may contain at least -S(=O)z-O- or -S(=O)-O-, and the like, as a ring-constituting unit.

Examples of the cyclic sulfate ester include alkylene sulfates and alkenylene sulfates. As the cyclic sulfate ester, C₂₋₄ alkylene sulfate, C₂₋₄ alkenylene sulfate, and the like may be used. Specific examples of the cyclic sulfate ester include ethylene sulfate, propylene sulfate, trimethylene sulfate, butylene sulfate, and vinylene sulfate.

Examples of the cyclic sulfite ester include alkylene sulfites and alkenylene sulfites. As the cyclic sulfite ester, C₂₋₄ alkylene sulfite, C₂₋₄ alkenylene sulfite, and the like may be used. Specific examples of the cyclic sulfite ester include ethylene sulfite, propylene sulfite, trimethylene sulfite, butylene sulfite, and vinylene sulfite.

Examples of the sultone include alkane sultones and alkene sultones. As the sultone, C₃₋₅ alkane sultone, C₃₋₅ alkene sultone, and the like may be used. Specific examples of the sultone include 1,3-propane sultone, 1,4-butane sultone, and 1,3-propene sultone.

The first component also encompasses those having one or two or more substituents. The first component may have a substituent on a carbon atom constituting the ring of the first component. Examples of the substituent include an alkyl group, a hydroxyalkyl group, a hydroxy group, an alkoxy group, and a halogen atom. The substituent may have 1 to 4 carbon atoms, or 1 to 3 carbon atoms. The halogen atom is, for example, chlorine atom, fluorine atom, or the like.

As the first component, C₂₋₄ alkylene sulfate, C₂₋₄ alkylene sulfite, C₃₋₅ alkane sultone, and C₃₋₅ alkene sultone are preferred.

The non-aqueous electrolyte may contain one kind of the first component, or may contain two or more kinds in combination.

The content of the first component in the non-aqueous electrolyte is, for example, 5 mass% or less, and may be 3 mass% or less. When the content of the first component is in the range as above, the reduction of non-aqueous electrolyte can be further suppressed. In view of further enhancing the effect of suppressing the reduction of non-aqueous electrolyte, the content of the first component in the non-aqueous electrolyte is preferably set to 2 mass% or less. In this case, the viscosity of the non-aqueous electrolyte can be kept low, and the charge and discharge reactions can proceed more uniformly, and as a result, the consumption of non-aqueous electrolyte is suppressed as a whole. In a non-aqueous electrolyte secondary battery, the content of the first component in the non-aqueous electrolyte varies during storage or during charge and discharge. Therefore, it is sufficient that the first component remains at a concentration equal to or higher than the detection limit in the non-aqueous electrolyte in the non-aqueous electrolyte secondary battery. The content of the first component in the non-aqueous electrolyte may be 0.01 mass% or more.

The content of the first component in the non-aqueous electrolyte used for manufacturing a non-aqueous electrolyte secondary battery may be 0.1 mass% or more, and may be 0.3 mass% or more, or 0.5 mass% or more. The content of the first component in the non-aqueous electrolyte used for manufacturing a non-aqueous electrolyte secondary battery is, for example, 5 mass% or less, and may be 3 mass% or less or 2 mass% or less. These upper and lower limits can be combined in any combination. By using a non-aqueous electrolyte in which the content of the first component is in the range as above, for manufacturing a battery, the reduction of non-aqueous electrolyte after repeated charge and discharge can be effectively suppressed.

The content of the first component in the non-aqueous electrolyte can be determined, for example, using gas chromatography under the following conditions.
Measuring apparatus: GC-2010 Plus, available from Shimadzu Corporation
Column: HP-1 (1 µm × 60 m), available from J&W Corporation
Linear velocity: 30.0 cm/sec
Inlet temperature: 270 °C
Detector: FID 290 °C (sens. 10¹)
(Non-aqueous solvent)

As the non-aqueous solvent, for example, a cyclic carbonic acid ester, a chain carbonic acid ester, a cyclic carboxylic acid ester, a chain carboxylic acid ester, and the like are exemplified. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate (MA), ethyl acetate, propyl acetate, methyl propionate, ethyl propionate, and propyl propionate. The non-aqueous solvent may be used singly or in combination of two or more kinds. In the case where the non-aqueous electrolyte contains a chain carboxylic acid ester, when combined with a negative electrode material mixture containing CNTs, a side reaction tends to occur. However, even in such a case, the effect produced by using the first component can be remarkably obtained. Therefore, the side reaction can be suppressed, and excellent cycle characteristics can be ensured. Such an effect becomes remarkable when the non-aqueous electrolyte contains at least MA as the chain carboxylic acid ester, which is therefore more preferable.

### (Lithium salt)

As the lithium salt, for example, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, imides, and like are exemplified. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bistrifluoromethanesulfonyl imide (LiN(CF₃SO₂)₂), lithium trifluoromethanesulfonyl nonafluorobutanesulfonyl imide (LiN(CF₃SO₂)(C₄F₉SO₂)), and lithium bispentafluoroethanesulfonyl imide (LiN(C₂F₅SO₂)₂). The non-aqueous electrolyte may contain one kind of lithium salt or two or more kinds of lithium salts in combination.

The concentration of the lithium salt in the non-aqueous electrolyte is, for example, 0.5 mol/L or more and 2 mol/L or less.

The non-aqueous electrolyte may contain another additive. The other additive is referred to as a second component. The second component is, for example, at least one selected from the group consisting of vinylene carbonate, fluoroethylene carbonate, and vinylethylene carbonate.

### (Separator)

Usually, it is desirable to interpose a separator between the positive electrode and the negative electrode. The separator is excellent in ion permeability and has moderate mechanical strength and electrically insulating properties. The separator may be, for example, a microporous thin film, a woven or nonwoven fabric, or a stack of at least two selected from these. As a material of the separator, polyolefin (e.g., polypropylene, polyethylene) is preferred.

### (Others)

The non-aqueous electrolyte secondary battery, for example, has a structure in which an electrode group formed by winding the positive electrode and the negative electrode with the separator interposed therebetween is housed in an outer body, together with the non-aqueous electrolyte. The wound-type electrode group may be replaced with a different form of electrode group, such as a stacked-type electrode group formed by stacking the positive electrode and the negative electrode with the separator interposed therebetween. The non-aqueous electrolyte secondary battery may be in any form, such as cylindrical type, prismatic type, coin type, button type, or laminate type.

The structure of a prismatic non-aqueous electrolyte secondary battery as an example of the non-aqueous electrolyte secondary battery according to the present disclosure will be described below with reference to FIG. 1. FIG. 1 is a schematic partially cut-away oblique view of a non-aqueous electrolyte secondary battery according to one embodiment of the present disclosure.

The battery includes a bottomed prismatic battery case 4, and an electrode group 1 and a non-aqueous electrolyte housed in the battery case 4. The electrode group 1 has a long negative electrode, a long positive electrode, and a separator interposed between the positive electrode and the negative electrode and preventing them from directly contacting with each other. The electrode group 1 is formed by winding the negative electrode, the positive electrode, and the separator around a flat plate-like winding core, and then removing the winding core.

To the negative electrode current collector of the negative electrode, a negative electrode lead 3 is attached at its one end, by means of welding or the like. The negative electrode lead 3 is electrically connected at its other end to a negative electrode terminal 6 disposed at a sealing plate 5. The negative electrode terminal 6 is electrically insulated from the sealing plate 5 by a resin gasket 7. To the positive electrode current collector of the positive electrode, a positive electrode lead 2 is attached at its one end, by means of welding or the like. The positive electrode lead 2 is connected at its other end to the back side of the sealing plate 5 via an insulating plate. That is, the positive electrode lead 2 is electrically connected to the battery case 4 serving as a positive electrode terminal. The insulating plate provides electrical insulation between the electrode group 1 and the sealing plate 5 and between the negative electrode lead 3 and the battery case 4. The periphery of the sealing plate 5 is engaged with the opening end of the battery case 4, and the engaging portion is laser-welded. In this way, the opening of battery case 4 is sealed with the sealing plate 5. An electrolyte injection port provided in the sealing plate 5 is closed with a sealing stopper 8.

### [Examples]

The present disclosure will be more specifically described below with reference to Examples and Comparative Examples, but the present invention is not limited to the following Examples.

### «Examples 1 to 6 and Comparative Examples 1 to 9»

A non-aqueous electrolyte secondary battery was fabricated and evaluated in the following procedure.

### (1) Production of negative electrode

An appropriate amount of water was added to a negative electrode material mixture, followed by mixing, to obtain a negative electrode slurry. The negative electrode material mixture used here was a mixture of a negative electrode active material, a binder, and a conductive agent.

The negative electrode active material used here was a mixture of a Si-containing material and graphite (average particle diameter (D50): 25 µm). For the Si-containing material, Li_{2y}SiO_{2+y} particles (y=1, average particle diameter (D50): 10 µm) whose surface was coated with a conductive layer containing conductive carbon, and SiOₓ particles (x=1, average particle diameter (D50): 5 µm) whose surface was coated with a conductive layer containing conductive carbon were used. The mass ratio of the Li_{2y}SiO_{2+y} particles excluding the conductive layer to the SiOₓ particles excluding the conductive layer was set to 1:1. In the negative electrode active material, the mass ratio of the Si-containing material excluding the conductive layers to the graphite was set to 6:94.

For the binder, sodium polyacrylate (PAA-Na), sodium salt of CMC (CMC-Na), and SBR were used. For the conductive agent, CNTs (average diameter: about 1.6 nm, average length: about 5 µm) including 90 mass% or more of SWCNTs were used.

The content of the CNTs in the negative electrode material mixture was set as shown in Table 1. The contents of the PAA-Na, CMC-Na, and SBR in the negative electrode material mixture were each set to 1 mass%.

Next, the negative electrode slurry was applied onto a surface of the copper foil, the applied film was dried, and then rolled, to form a negative electrode material mixture layer (thickness: 80 µm, density: 1.6 g/cm³) on both sides of the copper foil. A negative electrode was thus obtained.

### (2) Production of positive electrode

To 95 parts by mass of a lithium-containing composite oxide (LiNi_{0.8}Co_{0.18}Al_{0.02}O₂), 2.5 parts by mass of acetylene black, 2.5 parts by mass of polyvinylidene fluoride, and an appropriate amount of NMP were added and mixed, to obtain a positive electrode slurry. Next, the positive electrode slurry was applied onto a surface of an aluminum foil, and the applied film was dried, and then rolled, to form a positive electrode material mixture layer (thickness: 95 µm, density: 3.6 g/cm³) on both sides of the aluminum foil. A positive electrode was thus obtained.

### (3) Preparation of non-aqueous electrolyte

A non-aqueous electrolyte was prepared by dissolving LiPF₆ and, as necessary, the first component as shown in Table 1, in a mixed solvent of EC, DMC and MA (EC:DMC:MA = 20:60:20 (volume ratio)). The concentration of LiPF₆ in the non-aqueous electrolyte was set to 1.35 mol/L. The concentration (initial concentration) of the first component in the prepared non-aqueous electrolyte was set to a value (mass%) shown in Table 1 as the added amount of first component.

### (4) Fabrication of non-aqueous electrolyte secondary battery

A positive electrode lead made of Al was attached to the positive electrode obtained above, and a negative electrode lead made of Ni was attached to the negative electrode obtained above. In an inert gas atmosphere, the positive electrode and the negative electrode were spirally wound with a polyethylene thin film (separator) interposed therebetween, to prepare a wound electrode group. The electrode group was housed in a bag-shaped outer body formed of a laminate sheet having an Al layer, and after a predetermined amount of the above non-aqueous electrolyte was injected, the outer body was sealed, to complete a non-aqueous electrolyte secondary battery. When the electrode group was housed in the outer body, the positive electrode lead and the negative electrode lead were each partially exposed outside the outer body.

### (Evaluation)

The non-aqueous electrolyte secondary battery was subjected to charge-discharge cycles in the following procedure, to determine a remaining amount of non-aqueous electrolyte and a capacity retention ratio after cycling.

In a 45 °C environment, a constant-current charging was performed at a current of 0.5 C (180 mA) until the voltage of the non-aqueous electrolyte secondary battery reached 4.2 V, and then, a constant-voltage charging was performed at a voltage of 4.2 V until the current reached 0.05 C (18 mA). After resting for 10 minutes, a constant-current discharging was performed at a current of 0.7 C (252 mA) until the voltage of the non-aqueous electrolyte secondary battery reached 2.5 V The discharge capacity (Ci) at this time was measured. With the above charging, resting and discharging taken as one cycle, 400 cycles were performed in total, to measure a discharge capacity (Cc) at the 400th cycle. A ratio (%) of the discharge capacity Cc to the initial discharge capacity Ci which was taken as 100% was determined as the capacity retention ratio.

The non-aqueous electrolyte secondary battery after 400 cycles was disassembled, and the remaining non-aqueous electrolyte was collected, to determine the volume thereof. A ratio (%) of the volume of the remaining non-aqueous electrolyte to the initial volume of the non-aqueous electrolyte which was taken as 100% was calculated. In Table 1, this ratio is denoted as the non-aqueous electrolyte remaining amount (%).

The results of Examples and Comparative Examples are shown in Table 1. In Table 1, the CNT content (mass%) in the negative electrode material mixture, and the kind and the amount (mass%) of the first component added to the non-aqueous electrolyte are also shown. In Table 1, E1 to E6 represent Examples 1 to 6, and C1 to C9 represent Comparative Examples 1 to 9.

**[Table 1]**

| | CNT content (mass%) | Kind of first component | Added amount of first component (mass%) | Non-aqueous electrolyte remaining amount (%) | Capacity retention ratio (%) |
|---|---|---|---|---|---|
| E1 | 0.020 | ES | 0.5 | 74.3 | 78.2 |
| E2 | | ES | 1.0 | 75.4 | 79.5 |
| E3 | | ES | 2.0 | 73.8 | 79.5 |
| E4 | | DTD | 1.0 | 74.8 | 79.3 |
| E5 | | PRS | 1.0 | 75.0 | 79.3 |
| E6 | 0.050 | ES | 1.0 | 74.5 | 79.0 |
| C1 | 0.000 | - | 0.0 | 74.5 | 77.9 |
| C2 | 0.020 | - | 0.0 | 71.2 | 77.7 |
| C3 | 0.000 | ES | 1.0 | 74.4 | 78.2 |
| C4 | | DTD | 1.0 | 74.6 | 77.9 |
| C5 | | PRS | 1.0 | 74.3 | 78.0 |
| C6 | 0.002 | - | 0.0 | 71.2 | 78.0 |
| C7 | 0.100 | - | 0.0 | 68.2 | 77.8 |
| C8 | 0.002 | ES | 1.0 | 74.2 | 78.0 |
| C9 | 0.100 | ES | 1.0 | 70.5 | 78.0 |

| | | | | | |
|---|---|---|---|---|---|
| ES: Ethylene sulfite DTD: Ethylene sulfate PRS: 1,3-propene sultone | | | | | |

Table 1 shows that when the negative electrode material mixture contained CNTs, as compared to when not containing CNTs, the remaining amount of non-aqueous electrolyte was reduced by 3.3% (comparison between C1 and C2). On the other hand, when the negative electrode material mixture did not contain CNTs, even though the first component was added to the non-aqueous electrolyte, the remaining amount of non-aqueous electrolyte was almost the same (comparison between C1 and C3 to C5). In other words, when CNTs are not contained in the negative electrode material mixture, the first component makes almost no contribution in suppressing the reduction of non-aqueous electrolyte. However, when the negative electrode material mixture containing CNTs is combined with a non-aqueous electrolyte containing the first component, the non-aqueous electrolyte reduction suppression effect by the first component is exhibited. Specifically, as compared to in C2 which included a non-aqueous electrolyte that did not contain the first component, in E1 to E6, the remaining amount of non-aqueous electrolyte was almost equal to or exceeded that when the negative electrode material mixture did not contain CNTs. Furthermore, in E1 to E6, as compared to when not using CNTs or when not using the first component, the capacity retention ratio was maintained high, which led to excellent cycle characteristics (comparison between C1 to C5 and E1 to E6). This is presumably because, by containing CNTs in the negative electrode material mixture, the breakage of conductive paths in the negative electrode material mixture that occurs when charge and discharge are repeated can be suppressed, and in addition, by using the first component, the side reaction that occurs when the negative electrode material mixture contains CNTs can be suppressed, allowing electrons to be preferentially consumed for the charge and discharge reactions.

When the content of CNTs in the negative electrode material mixture was less than 0.005 mass%, the reduction of the remaining amount of non-aqueous electrolyte due to the inclusion of CNTs was not apparent (C8). Therefore, the remaining amount of non-aqueous electrolyte in C8 showed almost no difference from that in C3 in which the negative electrode material mixture that did not contain CNTs was combined with the non-aqueous electrolyte containing the first component. When the negative electrode in which the CNT content in the negative electrode material mixture exceeded 0.05 mass% was combined with the non-aqueous electrolyte containing the first component, in suppressing the reduction of the remaining amount of non-aqueous electrolyte, a remarkable effect was not obtained even though the first component was used (comparison of E2 and C2 with C7 and C9).

### [Industrial Applicability]

The non-aqueous electrolyte secondary battery according to the present disclosure is useful as a main power supply for mobile communication equipment, portable electronic equipment, and other devices. It is to be noted, however, that the application of the non-aqueous electrolyte secondary battery is not limited thereto.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing stopper

## Claims

1. A non-aqueous electrolyte secondary battery, comprising:
a positive electrode, a negative electrode, and a non-aqueous electrolyte, wherein
the negative electrode includes a negative electrode material mixture containing a negative electrode active material capable of electrochemically absorbing and releasing lithium ions, and carbon nanotubes,
the negative electrode active material includes a silicon-containing material and a carbonaceous material,
the non-aqueous electrolyte includes at least one cyclic ester selected from the group consisting of a cyclic sulfate ester, a cyclic sulfite ester, and a sultone, and
a content of the carbon nanotubes in the negative electrode material mixture is 0.005 mass% or more and 0.05 mass% or less.

2. The non-aqueous electrolyte secondary battery according to claim 1, wherein a proportion of the silicon-containing material occupying the negative electrode active material is 4 mass% or more.

3. The non-aqueous electrolyte secondary battery according to claim 1 or 2, wherein the cyclic ester is at least one selected from the group consisting of C₂₋₄ alkylene sulfate, C₂₋₄ alkylene sulfite, C₃₋₅ alkane sultone, and C₃₋₅ alkene sultone.

4. The non-aqueous electrolyte secondary battery according to any one of claims 1 to 3, wherein a content of the cyclic ester in the non-aqueous electrolyte is 5 mass% or less.

5. The non-aqueous electrolyte secondary battery according to any one of claims 1 to 4, wherein the carbon nanotubes include single-walled carbon nanotubes.

6. The non-aqueous electrolyte secondary battery according to claim 5, wherein a ratio of the single-walled carbon nanotubes occupying the carbon nanotubes is 90% or more.

7. The non-aqueous electrolyte secondary battery according to any one of claims 1 to 6, wherein the non-aqueous electrolyte further includes a chain carboxylic acid ester.

8. The non-aqueous electrolyte secondary battery according to claim 7, wherein the non-aqueous electrolyte contains at least methyl acetate as the chain carboxylic acid ester.
